# EUROPÄISCHE PATENTSCHRIFT

(11) **EP 3 435 525 B1**
(45) Veröffentlichungstag und Bekanntmachung des Hinweises auf die Patenterteilung: **04.11.2020**
(21) Anmeldenummer: 18157855.0
(22) Anmeldetag: 21.02.2018
(51) Int. Cl.: H02K 3/52, H02K 3/32, H02K 3/34, H02K 15/12, H02K 3/38

(54) **STATOR EINER ELEKTRISCHEN MASCHINE**
STATOR OF AN ELECTRIC MACHINE
STATOR POUR UNE MACHINE ÉLECTRIQUE

(30) Priorität: 26.07.2017 DE 102017212795
(43) Veröffentlichungstag der Anmeldung: 30.01.2019
(73) Patentinhaber: Robert Bosch GmbH, 70442 Stuttgart (DE)
(72) Erfinder: Lange, Fabian, 30175 Hannover (DE); Jacob, Steffen, 30161 Hannover (DE)

(56) Entgegenhaltungen:
- CN-U- 203 481 947
- JP-A- 2002 233 089

## Beschreibung

### Stand der Technik

Die Erfindung betrifft einen Stator einer elektrischen Maschine.

Es ist schon ein Stator einer elektrischen Maschine aus der JP 2008-278692 A bekannt, mit Statorzähnen, an denen jeweils ein Spulenträger mit jeweils einer Spulenwicklung vorgesehen ist, wobei die Spulenwicklungen jeweils einen elektrischen Leiter mit einer elektrisch isolierenden Beschichtung aufweisen und jeweils mit einem von mehreren Phasenleitern einer Phasenleiteranordnung elektrisch verbunden sind. Die Phasenleiteranordnung ist an den Spulenträgern abgestützt.

Aus der JP 2002 233089 A ist ein Stator für eine elektrische Maschine bekannt, mit Statorzähnen, an denen jeweils eine Spulenwicklung vorgesehen ist, die jeweils einen elektrischen Leiterdraht mit selbstschmelzendem Lack umfasst.

Weiterhin ist aus der CN 203 481 947 U ein Statorzahn eines Stators mit einer Spulenwicklung bekannt. Der elektrische Leiter der Spulenwicklung weist eine Backlackbeschichtung auf.

### Vorteile der Erfindung

Der erfindungsgemäße Stator mit den Merkmalen des Hauptanspruchs hat demgegenüber den Vorteil, dass die Befestigung der Phasenleiteranordnung verbessert bzw. vereinfacht wird, indem der elektrische Leiter der Spulenwicklungen jeweils eine Backlack-Beschichtung aufweist, dass Spulenwicklungen vorgesehen sind, die an ihrer der Phasenleiteranordnung zugewandten Spulenseite in der obersten Lage gekreuzte Wicklungsabschnitte aufweisen, und dass die Phasenleiteranordnung an gekreuzte Wicklungsabschnitte aufweisenden Spulenseiten mehrerer Spulenwicklungen angeklebt ist.

Erfindungsgemäß sind die Wicklungsabschnitte der jeweiligen Spulenwicklung in der obersten Lage derart gekreuzt, dass mit dem Klebstoff auffüllbare Wickellücken zumindest in den zwei obersten Lagen der Spulenwicklungen entstehen.

Durch die Backlack-Beschichtung werden die Wicklungsabschnitte jeder Spulenwicklung zu einem festen Verbund verbunden, an dessen oberster Lage dann die Phasenleiteranordnung befestigbar ist. Um zu vermeiden, dass eine Wiedererweichung des Backlacks zu einem Versagen der Verbindung zwischen der Phasenleiteranordnung und den Spulenwicklungen führt, weisen die der Phasenleiteranordnung zugewandten Spulenseiten der betreffenden Spulenwicklungen erfindungsgemäß gekreuzte Wicklungsabschnitte auf. Durch die gekreuzten Wicklungsabschnitte wird eine Verankerung des Klebstoffs in der obersten Lage oder in den zwei obersten Lagen der jeweiligen Spulenwicklung erreicht. Mit anderen Worten ausgedrückt, wird der Klebstoff formschlüssig mit der jeweiligen Spulenwicklung verbunden.

Durch die in den Unteransprüchen aufgeführten Maßnahmen sind vorteilhafte Weiterbildungen und Verbesserungen des im Hauptanspruch angegebenen Stators möglich.

Besonders vorteilhaft ist, wenn die Querschnitte der in der obersten Lage liegenden Wicklungsabschnitte der jeweiligen Spulenwicklung vollständig von dem Klebstoff umschlossen sind, da auf diese Weise eine Verbindung zwischen der Phasenleiteranordnung und den Spulenwicklungen entsteht, die auch bei Erweichung des Backlacks bei entsprechender Betriebstemperatur des Stators der elektrischen Maschine nicht versagt.

Auch vorteilhaft ist, wenn die Spulenträger jeweils einen der Statorzähne umschließen und jeweils eine um den jeweiligen Statorzahn umlaufende Spulenaufnahme aufweisen, die in radialer Richtung bezüglich einer Statorachse gesehen jeweils zwischen zwei Aufnahmewandungen des Spulenträgers gebildet und jeweils mit einer der Spulenwicklungen bewickelbar ist, wobei die Phasenleiteranordnung an zumindest einer der Aufnahmewandungen zumindest eines Spulenträgers abgestützt oder lagefixiert ist. Auf diese Weise kann ein vorbestimmter Klebespalt für die Verbindung zwischen der Phasenleiteranordnung und den Spulenwicklungen eingestellt werden.

### Zeichnung

Ein Ausführungsbeispiel der Erfindung ist in der Zeichnung vereinfacht dargestellt und in der nachfolgenden Beschreibung näher erläutert.
- Fig.1: zeigt im Schnitt einen erfindungsgemäßen Stator,
- Fig.2: eine vergrößerte Teilansicht des Stators nach Fig.1 und
- Fig.3: eine Draufsicht auf die der Phasenleiteranordnung 10 zugewandte Spulenseite eines der Spulenträger 3 nach Fig.1 und Fig.2.

### Beschreibung des Ausführungsbeispiels

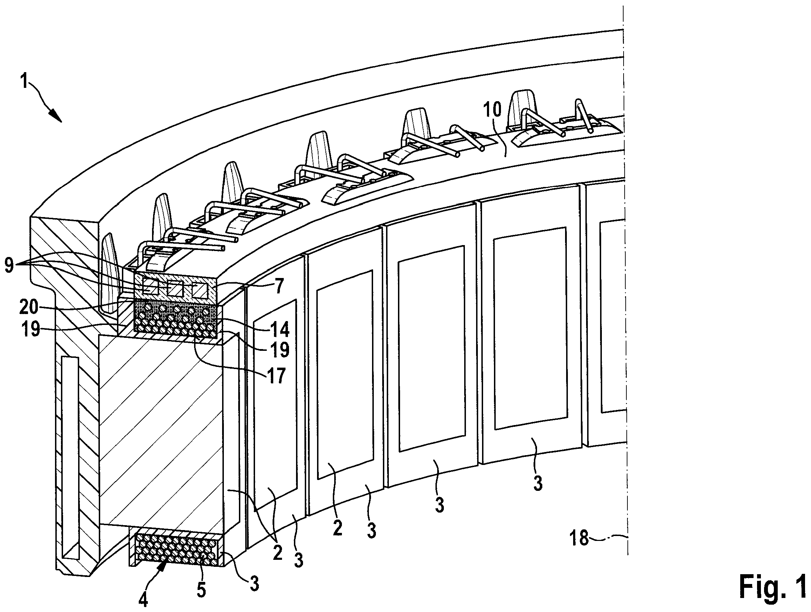

Fig.1 zeigt im Schnitt einen erfindungsgemäßen Stator.

Der Stator 1 einer elektrischen Maschine weist Statorzähne 2 auf, an denen jeweils ein elektrisch nicht leitender Spulenträger 3 mit jeweils einer Spulenwicklung 4 vorgesehen ist. Die Spulenwicklungen 4 sind jeweils gebildet durch Windungen eines elektrischen Leiters 5, der in bekannter Weise mit einer elektrisch isolierenden Beschichtung 6 versehen ist. Die einzelnen Spulenwicklungen 4 des Stators 1, die auch als Einzelzahnwicklungen bezeichnet werden können, sind jeweils mit einem von mehreren Phasenleitern 9 einer Phasenleiteranordnung 10 elektrisch verbunden. Die Phasenleiter 9 der Phasenleiteranordnung 10 sind jeweils einer elektrischen Phase u,v,w zugeordnet und voneinander elektrisch isoliert, beispielsweise indem diese in der Phasenleiteranordnung 10 von einem elektrisch isolierenden bzw. elektrisch nicht leitenden Material 7 umschlossen sind.

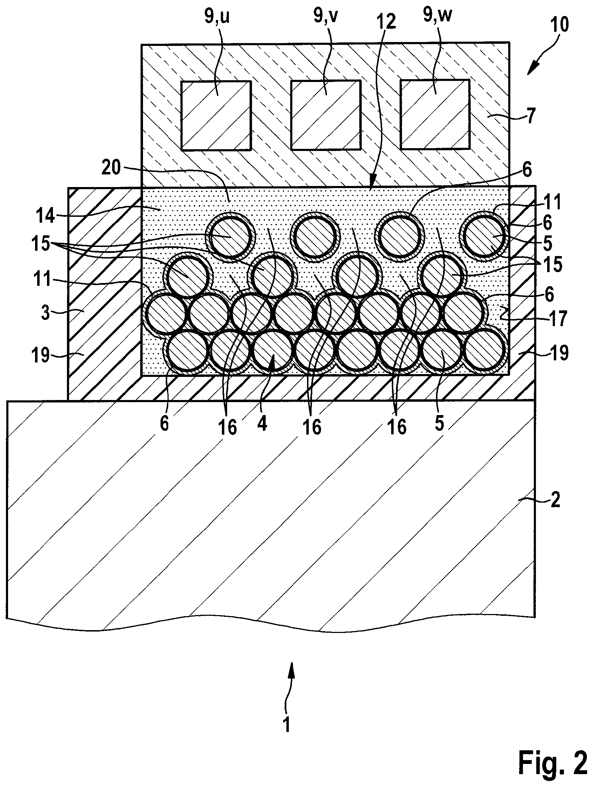

Fig.2 zeigt eine vergrößerte Teilansicht des Stators nach Fig.1.

Erfindungsgemäß ist vorgesehen, dass der elektrische Leiter 5 der Spulenwicklungen 4 jeweils eine Backlack-Beschichtung 11 aufweist, dass Spulenwicklungen 4 vorgesehen sind, die an ihrer der Phasenleiteranordnung 10 zugewandten Spulenseite 12 in ihrer obersten Lage gekreuzte Wicklungsabschnitte 15 aufweisen, und dass die Phasenleiteranordnung 10 an den gekreuzte Wicklungsabschnitte 15 aufweisenden Spulenseiten 12 mehrerer Spulenwicklungen 4 angeklebt ist, beispielsweise unmittelbar angeklebt ist.

Die Backlack-Beschichtung 11 ist beispielsweise auf der elektrisch isolierenden Beschichtung 6 vorgesehen und umschließt ebenso wie die Beschichtung 6 den Querschnitt des elektrischen Leiters 5. Durch die Backlack-Beschichtung 11 werden die Wicklungsabschnitte jeder Spulenwicklung 4 zu einem festen Verbund verbacken bzw. verbunden. Dies geschieht bei entsprechendem Stromfluss durch die betreffende Spulenwicklung 4 und die dadurch bedingte Erwärmung der Spulenwicklung 4. Alternativ kann die Spulenwicklung 4 auch auf eine andere Art auf die Verbacktemperatur erwärmt werden. An der obersten Lage dieses festen Verbundes 4 ist dann die Phasenleiteranordnung 10 befestigbar. Um zu vermeiden, dass eine Wiedererweichung des Backlacks zu einem Versagen der Verbindung zwischen der Phasenleiteranordnung 10 und den Spulenwicklungen 4, beispielsweise zu einem Bruch im Backlack, führt, weisen die der Phasenleiteranordnung 10 zugewandten Spulenseiten 12 der betreffenden Spulenwicklungen 4 erfindungsgemäß gekreuzte Wicklungsabschnitte 15 auf. Die der Phasenleiteranordnung 10 abgewandten Spulenseiten 12 der betreffenden Spulenwicklungen 4 haben keine gekreuzten Wicklungsabschnitte 15, sondern die Spulenwicklungen 4 sind dort ohne Wickellücken 16 gewickelt (Fig.1).

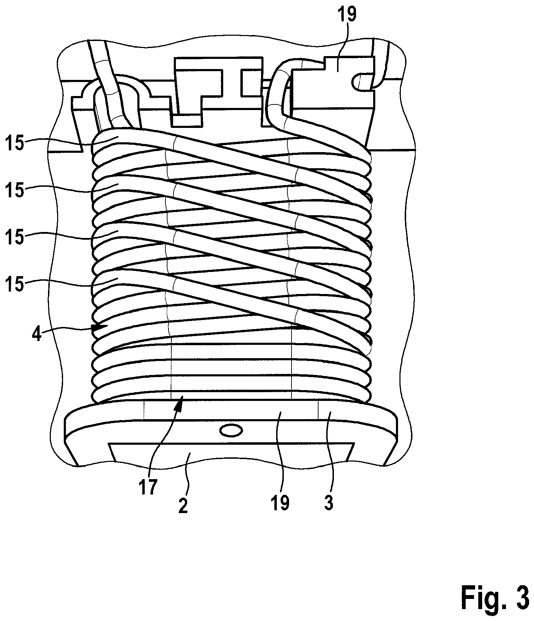

Die gekreuzten Wicklungsabschnitte 15 sind Wicklungsabschnitte, die sich mit anderen Wicklungsabschnitten derselben Spulenwicklung 4 kreuzen (Fig.3). Durch die gekreuzten Wicklungsabschnitte 15 entstehen zumindest in den zwei obersten Lagen der jeweiligen Spulenwicklung 4 Wickellücken bzw. Wicklungshohlräume 16, die mit Klebstoff 14 auffüllbar sind, um die Phasenleiteranordnung 10 in der betreffenden Spulenwicklung 4 zu verankern bzw. mit der betreffenden Spulenwicklung 4 formschlüssig zu verbinden. Bei der erfindungsgemäßen Klebeverbindung werden die Querschnitte der in der obersten Lage liegenden gekreuzten Wicklungsabschnitte 15 der jeweiligen Spulenwicklung 4 vollständig von dem Klebstoff umschlossen.

Die Spulenträger 3 umschließen jeweils einen der Statorzähne 2 und weisen jeweils eine um den jeweiligen Statorzahn 2 umlaufende Spulenaufnahme 17 auf, die in radialer Richtung bezüglich einer Statorachse 18 gesehen jeweils zwischen zwei Aufnahmewandungen 19 des Spulenträgers 3 gebildet und jeweils mit einer der Spulenwicklungen 4 bewickelbar ist.

Die Phasenleiteranordnung 10 kann beispielsweise an zumindest einer Aufnahmewandung 19 zumindest eines Spulenträgers 3 abgestützt oder lagefixiert sein, um einen konstanten Klebespalt 20 zwischen der Phasenleiteranordnung 10 und den Spulenseiten 12 der betreffenden Spulenwicklungen 4 einzustellen.

## Patentansprüche

1. Stator (1) für eine elektrische Maschine mit einer Statorachse (18) und mit Statorzähnen (2), an denen jeweils ein Spulenträger (3) mit jeweils einer Spulenwicklung (4) vorgesehen ist, wobei der Spulenträger (3) jeweils in axialer Richtung bezüglich der Statorachse (18) derart in mehreren Lagen bewickelt ist, dass die jeweilige Spulenwicklung (4) zumindest zwei oberste Lagen aufweist, und mit einer Phasenleiteranordnung (10),
wobei die Spulenwicklungen (4) jeweils einen elektrischen Leiter (5) mit einer elektrisch isolierenden Beschichtung (6) aufweisen und jeweils mit einem von mehreren Phasenleitern (9) der Phasenleiteranordnung (10) elektrisch verbunden sind, wobei der elektrische Leiter (5) der Spulenwicklungen (4) jeweils eine Backlack-Beschichtung (11) aufweist, durch welche Wicklungsabschnitte jeder Spulenwicklung (4) zu einem festen Verbund verbunden sind, an dessen oberster Lage die Phasenleiteranordnung (10) befestigt ist,
wobei Spulenwicklungen (4) vorgesehen sind, die an ihrer der Phasenleiteranordnung (10) in axialer Richtung zugewandten Spulenseite (12) in der obersten Lage gekreuzte Wicklungsabschnitte (15) aufweisen, die sich mit anderen Wicklungsabschnitten derselben Spulenwicklung (4) kreuzen,
wobei
- die Phasenleiteranordnung (10) mit einem Klebstoff (14) an gekreuzte Wicklungsabschnitte (15) aufweisende Spulenseiten (12) mehrerer Spulenwicklungen (4) angeklebt ist,
- die Wicklungsabschnitte (15) der jeweiligen Spulenwicklung (4) in der obersten Lage derart gekreuzt sind, dass mit dem Klebstoff (14) auffüllbare Wicklungshohlräume (16) zumindest in den zwei obersten Lagen der Spulenwicklungen (4) entstehen, und
- der Klebstoff (14) durch die gekreuzten Wicklungsabschnitte (15) in der obersten Lage oder in den zwei obersten Lagen der jeweiligen Spulenwicklung (4) formschlüssig verankert ist.

2. Stator nach Anspruch 1, **dadurch gekennzeichnet, dass** die Querschnitte der in der obersten Lage liegenden Wicklungsabschnitte (15) der jeweiligen Spulenwicklung (4) vollständig von dem Klebstoff (14) umschlossen sind.

3. Stator nach einem der vorhergehenden Ansprüche , **dadurch gekennzeichnet, dass** die Spulenträger (3) jeweils einen der Statorzähne (2) umschließen und jeweils eine um den jeweiligen Statorzahn (2) umlaufende Spulenaufnahme (17) aufweisen, die in radialer Richtung bezüglich einer Statorachse (18) gesehen jeweils zwischen zwei Aufnahmewandungen (19) des Spulenträgers (3) gebildet und jeweils mit einer der Spulenwicklungen (4) bewickelbar ist, wobei die Phasenleiteranordnung (10) an zumindest einer der Aufnahmewandungen (19) zumindest eines Spulenträgers (3) abgestützt oder lagefixiert ist.

4. Elektrische Maschine mit einem Stator nach einem der vorhergehenden Ansprüche.

## Claims

1. Stator (1) for an electrical machine having a stator axis (18) and having stator teeth (2) on each of which a coil former (3) with in each case one coil winding (4) is provided, wherein the coil former (3) is in each case wound in several layers in the axial direction with respect to the stator axis (18) in such a way that the respective coil winding (4) has at least two topmost layers, and having a phase conductor arrangement (10),
wherein the coil windings (4) each have an electrical conductor (5) with an electrically insulating coating (6) and are each electrically connected to one of a plurality of phase conductors (9) of the phase conductor arrangement (10), wherein the electrical conductor (5) of the coil windings (4) has in each case one baked enamel coating (11) by way of which winding sections of each coil winding (4) are connected to form a fixed composite, to the topmost layer of which the phase conductor arrangement (10) is fastened,
wherein coil windings (4) are provided which have, on their coil side (12) which faces the phase conductor arrangement (10) in the axial direction, winding sections (15) which are crossed in the topmost layer and which cross other winding sections of the same coil winding (4),
wherein
- the phase conductor arrangement (10) is adhesively bonded by an adhesive (14) to coil sides (12), which have crossed winding sections (15), of a plurality of coil windings (4),
- the winding sections (15) of the respective coil winding (4) are crossed in the topmost layer in such a way that winding cavities (16) which can be filled with the adhesive (14) are produced at least in the two topmost layers of the coil windings (4), and
- the adhesive (14) is anchored in an interlocking manner by the crossed winding sections (15) in the topmost layer or in the two topmost layers of the respective coil winding (4).

2. Stator according to Claim 1, **characterized in that** the cross sections of the winding sections (15), which are situated in the topmost layer, of the respective coil winding (4) are completely enclosed by the adhesive (14).

3. Stator according to either of the preceding claims, **characterized in that** the coil formers (3) each enclose one of the stator teeth (2) and each have a coil receptacle (17) which encircles the respective stator tooth (2) and which is formed, as seen in the radial direction with respect to a stator axis (18), respectively between two receptacle walls (19) of the coil former (3) and can be wound in each case with one of the coil windings (4), wherein the phase conductor arrangement (10) is supported or fixed in position on at least one of the receptacle walls (19) of at least one coil former (3).

4. Electrical machine having a stator according to one of the preceding claims.

## Revendications

1. Stator (1) pour une machine électrique, comprenant un axe de stator (18) et comprenant des dents de stator (2) au niveau desquelles se trouve respectivement un porte-bobine (3) doté d'un enroulement de bobine (4) respectif, le porte-bobine (3) recevant plusieurs couches d'enroulement respectivement dans la direction axiale par rapport à l'axe de stator (18) de telle sorte que l'enroulement de bobine (4) respectif possède au moins deux couches supérieures, et comprenant un arrangement de conducteurs de phase (10),
les enroulements de bobine (4) possédant respectivement un conducteur électrique (5) muni d'un revêtement (6) électriquement isolant et étant respectivement reliés électriquement à l'un des plusieurs conducteurs de phase (9) de l'arrangement de conducteurs de phase (10), le conducteur électrique (5) des enroulements de bobine (4) possédant respectivement un revêtement en vernis à cuire (11), par lequel les portions d'enroulement de chaque enroulement de bobine (4) sont reliées en une liaison fixe sur la couche supérieure de laquelle est fixé l'arrangement de conducteurs de phase (10),
des enroulements de bobine (4) étant présents, lesquels possèdent, dans la couche supérieure au niveau de leur côté de bobine. (12) qui fait face à l'arrangement de conducteurs de phase (10) dans la direction axiale, des portions d'enroulement croisées (15) qui croisent d'autres portions d'enroulement du même enroulement de bobine (4),
- l'arrangement de conducteurs de phase (10) étant collé avec un adhésif (14) aux côtés de bobine (12) de plusieurs enroulements de bobine (4) qui possèdent des portions d'enroulement croisées (15),
- les portions d'enroulement (15) de l'enroulement de bobine (4) respectif se croisant dans la couche supérieure de telle sorte que les espaces creux d'enroulement (16) qui peuvent être remplis avec l'adhésif (14) sont produits au moins dans les deux couches supérieures des enroulements de bobine (4), et
- l'adhésif (14) est ancré par complémentarité de formes par les portions d'enroulement croisées (15) dans la couche supérieure ou dans les deux couches supérieures de l'enroulement de bobine (4) respectif.

2. Stator selon la revendication 1, **caractérisé en ce que** les sections transversales des portions d'enroulement (15) de l'enroulement de bobine (4) respectif qui se trouvent dans la couche supérieure sont entièrement entourées par l'adhésif (14).

3. Stator selon l'une des revendications précédentes, **caractérisé en ce que** les portes-bobine (3) entourent respectivement l'une des dents de stator (2) et possèdent respectivement un logement de bobine (17) circulaire autour de la dent de stator (2) respective, qui, vu dans la direction radiale par rapport à un axe de stator (18) est respectivement formé entre deux parois de logement (19) du porte-bobine (3) et autour duquel peut respectivement être enroulé l'un des enroulements de bobine (4), l'arrangement de conducteurs de phase (10) s'appuyant ou étant calé en position au niveau d'au moins l'une des parois de logement (19) d'au moins un porte-bobine (3).

4. Machine électrique comprenant un stator selon l'une des revendications précédentes.
